# EUROPÄISCHE PATENTANMELDUNG

(11) **EP 3 000 587 A1**
(43) Veröffentlichungstag der Anmeldung: **30.03.2016**
(21) Anmeldenummer: 15001167.4
(22) Anmeldetag: 03.03.2011
(51) Int. Cl.: B29C 70/22, B60B 5/02, B29C 70/38, B29L 31/32, B29C 70/40, B29C 70/48

(54) **VERFAHREN ZUR HERSTELLUNG VON RADFELGEN AUS FASERVERBUNDWERKSTOFFEN**

(30) Priorität: 05.03.2010 DE 102010010513
(62) Teilanmeldung aus: 11001771.2
(71) Anmelder: ThyssenKrupp Carbon Components GmbH, 01723 Wilsdruff STT Kesselsdorf (DE)
(72) Erfinder: Hufenbach, Werner, 01324 Dresden (DE); Lepper, Martin, 01279 Dresden (DE); Werner, Jens, 01640 Coswig (DE)

(57) **Zusammenfassung**

Die Erfindung betrifft ein Verfahren zur Herstellung von Radfelgen aus Faserverbundwerkstoffen, insbesondere zum Einsatz in der Kraftfahrzeugtechnik, bei dem eine Preform des Bauteils durch Ablage eines Fasermaterials auf einem die Bauteilkontur abbildenden Formwerkzeug gebildet und die Preform anschließend konsolidiert wird.

Die erfindungsgemäße Aufgabe, die darin besteht, ein Verfahren zur Herstellung von Radfelgen so weiterzubilden, dass die Radfelge mit der erforderlichen Gestaltungsvariabilität in Größe, Form und Materialeinsatz maschinell hergestellt werden kann, wird dadurch gelöst, dass die Preform (6) der Radfelge durch maschinelle Umflechtung gebildet wird, bei der das Formwerkzeug (5) als Flechtkern (2) dient und derart mit Flechtfäden (3) umflochten wird, dass ein Fasergeflecht (12) entsteht, welches formschlüssig am Formwerkzeug (5) anliegt.

## Beschreibung

Verfahren zur Herstellung von hohlprofilartigen Bauteilen aus Faserverbundwerkstoffen, insbesondere zur Herstellung von Radfelgen zum Einsatz in der Kraftfahrzeugtechnik, bei dem ein Formwerkzeug, welches die Bauteilkontur abbildet, eingesetzt wird und eine Preform des Bauteils durch Ablage eines Fasermaterials auf einem die Bauteilkontur abbildende Formwerkzeug gebildet und die Preform anschließend konsolidiert wird.

Bekannt ist, dass die Fertigung von hohlprofilartigen Bauteilen, insbesondere von Rädern beziehungsweise Radfelgen, aus Faserverbundwerkstoffen überwiegend durch manuelle Handhabungen von vorgefertigten Prepregs, Fasergeflechten, Multiaxialgelegen oder anderen Faserhalbzeugen erfolgt. Hierbei werden die Faserhalbzeuge manuell oder teilweise manuell an das Formwerkzeug des Bauteils, speziell an das Formwerkzeug der Radfelge, angeformt und zu einer Preform gebildet, welche anschließend - zur Fertigstellung des Bauteils - durch Konsolidierung (Wärmebehandlung und /oder durch Imprägnierung mit Zusatzstoffen) verfestigt wird. Die Preform ist ein der Bauteilgeometrie entsprechend geformtes Fasergebilde vor der Konsolidierung.

Nachteilig ist, dass derartige Verfahren hinsichtlich Wirtschaftlichkeit und Qualitätssicherung für Großserienfertigungen nicht akzeptabel sind. Aus der Marktsituation ergibt sich jedoch die Notwendigkeit zur industriellen Fertigung der Bauteile aus textilen Preformen.

Aus der Druckschrift DE 196 25 797 B4 ist ein Verfahren zur Herstellung eines Rades aus faserverstärktem Kunststoff bekannt geworden, bei dem ein aus einem Fasermaterial hergestellter textiler Schlauch, in dem das Fasermaterial flächig ungleichmäßig verteilt ist, unter Veränderung der flächigen Verteilung des Fasermaterials zu dem Rad verformt und anschließend konsolidiert wird. Das Rad ist dabei komplett aus dem textilen Schlauch geformt.

Nachteilig an dieser Lösung ist, dass sich die Faserlage in Abhängigkeit des Durchmessers und der Form der Radfelge einstellt und nicht beeinflussbar ist. Die Winkelstellung der Fasern beeinflusst die Belastbarkeit der Nabe jedoch entscheidend.

Außerdem ist von Nachteil, dass die Umformung des Schlauches in die Form der Radfelge vollständig im Konsolidierungswerkzeug geschieht, was zeitaufwändig und technologisch umständlich ausführbar ist.

Eine weitere Lösung offenbart die Druckschrift DE 10 2005 041 940 A1. Die beschriebene Radfelge aus Faserverbundwerkstoff ist einteilig aus einem Geflechtschlauch hergestellt, wobei der Geflechtschlauch über Stützkerne oder zueinander fixierte Ringe, die die Form der Radfelge ergeben, gezogen und fixiert wird, anschließend der vorfixierte Schlauch in ein Werkzeug zur Konsolidierung eingebracht und mit einem Matrixmaterial infiltriert wird. Damit werden mit einem einzigen Geflechtschlauch sowohl die Radnabe als auch das Felgenbett mit den Felgenhörnern ausgebildet.

Nachteilig ist auch hier, dass der Faserverlauf des Flechtschlauches bei der Formgebung nicht beeinflussbar ist und dadurch der Belastbarkeit der Radfelge Grenzen gesetzt sind.

Außerdem ist dadurch, dass fertigungsbedingt sowohl die Radnabe als auch das Felgenbett aus dem gleichen Material hergestellt sind, beispielsweise aus einem Kohlefasergeflecht, eine derart gefertigte Radfelge für bestimmte Einsatzfälle ungeeignet. Soll die Radnabe z. B. mit einer Bremsscheibe in Wirkverbindung stehen, die beim Bremsbetrieb des Rades Wärme erzeugt, kann die aus dem schlecht wärmeleitenden Kohlefasergeflecht bestehende Radnabe diese Wärme nicht im genügenden Maße ableiten.

Es ist daher Aufgabe der Erfindung, ein Verfahren zur Herstellung von Bauteilen, insbesondere Radfelgen, der eingangs genannten Art so weiterzubilden, dass das Bauteil mit der erforderlichen Gestaltungsvariabilität in Größe, Form und Materialeinsatz maschinell hergestellt werden kann. Insbesondere soll das Verfahren die maschinelle Herstellung einer belastungsangepassten Faserstruktur in kritischen Bereichen des Bauteils gewährleisten.

Erfindungsgemäß wird die Aufgabe dadurch gelöst, dass die Preform des Bauteils mittels Umflechtung gebildet wird, wobei das Formwerkzeug als Flechtkern dient und derart mit Flechtfäden umwickelt und umflochten wird, dass ein Fasergeflecht entsteht, welches formschlüssig am Formwerkzeug anliegt. Bei diesem erfindungsgemäßen Verfahren wird das Fasergelege mittels Umflechtung unmittelbar auf dem Formwerkzeug zur Formung einer Preform des Bauteils, insbesondere auf dem Formwerkzeug der Preform einer Radfelge, aufgebracht und gleichzeitig an das Formwerkzeug angeformt. Das Formwerkzeug der Preform ist erfindungsgemäß als Flechtkern in dem Umflechtungsvorgang eingesetzt. Die Preform kann somit mittels der Umflechttechnik in einem Verfahrensschritt maschinell angefertigt werden. Der bisherige separate, meist manuelle Fertigungsschritt der Anformung eines aufgelegten Fasergeleges an das Formwerkzeug entfällt gänzlich.

Die maschinelle Umflechtung des Formwerkzeuges ermöglicht zudem mit einem gesteuerten Flechtprozess die Strukturen des unmittelbar auf dem Formwerkzeug abgelegten Fasergeflechts individuell zu gestalten und somit Preformen (und folglich Bauteile) mit örtlich differenzierter Beschaffenheit zu erzeugen. So kann beispielsweise die Wandstärke einer Radfelge in Anpassung an die in unterschiedlicher Intensität und Verteilung wirkenden mechanischen oder thermischen Belastungen lokal variiert werden.

In einer vorteilhaften Ausführungsform des Verfahrens wird gemeinsam mit dem Flechtkern wenigstens ein Bauelement des Bauteils umwickelt und umflochten, wobei das Fasergeflecht formschlüssig an einer umlaufenden Kontur des Bauelementes anliegt.

Hierbei wird ein Gefüge aus Formwerkzeug bzw. Flechtkern und einem oder mehreren Bauelementen mit Flechtfäden umwickelt und umflochten. Während des Umflechtprozess wird ein formschlüssiger Anschluss des Fasergeflechts an das Bauelement erzielt, der genügt, um diese mehrteilige Preform zu fixieren und als eigenständiges Zwischenprodukt für nachfolgende Fertigungsschritte bereitzustellen. Das Bauelement begleitet dabei eine Doppelfunktion sowohl als ein verlorener Teil des Formwerkzeuges bzw. des Flechtkernes als auch als Teil der Preform.

Diese Ausführungsform des Verfahrens ermöglicht einzelne Bauelemente verschiedener Gestalt, (Faser-)Struktur und Material während des Umflechtprozesses maschinell zu einer Einheit zu verbinden, als Fertigungsvorstufe für ein, dem jeweiligen Einsatzfall entsprechend, individuell gestaltetes Bauteil. Dieser Vorzug der individuellen Gestaltung ist insbesondere bei der Fertigung von Radfelgen von Bedeutung. Neben der Herstellung von aus verschiedenen Faserverbundwerkstoffen bestehenden mehrteiligen Radfelgen erlaubt das erfindungsgemäße Verfahren auch die Herstellung von aus verschiedenen Materialien bestehenden Hybrid-Radfelgen.

In einer weiteren vorteilhaften Ausführungsform des Verfahrens wird während der Konsolidierung der Preform ein am Bauelement anliegender Abschnitt des Fasergeflechtes mit dem Bauelement stoffschlüssig verbunden. In einem einzigen Fertigungsschritt wird gleichzeitig mit der erforderlichen Konsolidierung der Preform unmittelbar die für die Stabilität des Bauteils erforderliche unlösbare Verbindung des Fasergeflechts mit dem Bauelement realisiert. Die Konsolidierung der Preform kann beispielsweise durch kurzzeitiges Aufschmelzen des Fasergeflechtes und Verharzen erfolgen, wobei gleichzeitig die stoffschlüssige Verbindung mit dem Bauelement hergestellt wird. Hieraus ergeben sich erhebliche fertigungstechnische Einsparungen.

Im Interesse einer Leichtbauweise des Bauteils besteht das Bauelement aus Faserverbundwerkstoff. Der Einsatz von Faserverbundwerkstoff ermöglicht es außerdem, spezifische, an die mechanischen und thermischen Belastungen angepasste Verstärkungsstrukturen im Bauteil vorzusehen. Das Bauelement kann beispielsweise ein bereits konsolidiertes Faserverbundteil mit einer von der im Umflechtungsprozess hergestellten Preform aus Faserverbundwerkstoff deutlich abweichenden Faserstruktur sein.

Alternativ können Bauelemente aus Metall im Umflechtungsprozess eingearbeitet werden, die dem Bauteil eine besondere thermische Belastbarkeit und Festigkeit verleihen. Beide Werkstoffarten sind insbesondere bei der Fertigung von Radfelgen von Bedeutung, je nach dem für welchen Zweck die Radfelgen vorgesehen sind. Beispielsweise wird bei einer Radfelge mit einem zu erwartenden intensiven Bremsbetrieb eine Radscheibe aus Metall als Bauelement vorgesehen und erfindungsgemäß im Umflechtungsprozess mit dem Fasergeflecht des Felgenbett verbunden, so dass die beim Bremsen erzeugte Wärme gut von der Bremsscheibe abgeleitet werden kann. Bei dieser Hybrid-Radfelge in Kombination aus einem Felgenbett aus Faserverbundwerkstoff und einer Radscheibe aus Metall bleibt die Leichtbauweise weitestgehend erhalten.

Vorzugsweise ist das Bauelement ein vorkonfektionierter Preformling aus Fasermaterial, welche noch zu verschmelzen und/oder mit Fasermatrixmaterial zu versetzen ist. Diese Halbzeuge eignen sich besonders für die erfindungsgemäße Verbundtechnologie zur Herstellung des Bauteils aus mehrteiligen Preformen. Ist ein solcher Preformling als Bauelement vorgesehen, kann die Konsolidierung des Preformlings gemeinsam mit der Konsolidierung der Preform erfolgen, was zu weiteren fertigungstechnischen Einsparungen führt.

Die Variationsmöglichkeiten für die Herstellung der Preform erhöhen sich auch dadurch, dass der Flechtkern mehrteilig ausgebildet ist. Das Formwerkzeug kann aus Einzelteilen, vorzugsweise unter Beiordnung oder Einschluss diverser Bauelemente, zu individuellen Flechtkernen komplettiert werden, die anschließend von den Flechtfäden vollständig umwickelt und umflochten werden.

Vorzugsweise ist das Bauelement eine Radscheibe, die zwischen zwei die Kontur des Felgenbettes einer Radfelge abbildenden Teilkernen des Flechtkernes angeordnet ist. An die Radscheibe sind gegenüber dem Felgenbett einer Radfelge besonders verschiedene Anforderungen gestellt. Durch den erfindungsgemäßen Flechtprozess können Bauelemente mit differenzierter Beschaffenheit, wie bei der Radscheibe und dem Felgenbett, mit einfachen Mitteln und mit geringem fertigungstechnischem Aufwand zuverlässig zusammengefügt werden.

In einer besonders vorteilhaften Ausführungsform ist das Bauelement derart dimensioniert und dem Flechtkern beigeordnet, dass es im Verhältnis zum Umfang des Flechtkernes einen radialen, vorzugsweise umlaufenden Überstand über dem Flechtkern und/oder eine radiale, vorzugsweise umlaufende Vertiefung gegenüber dem Flechtkern bildet. Damit ergeben sich über den Umfang des Flechtkernes nach außen bzw. nach innen weisende Absätze, die eine unlösbare Hinterschnittverbindung mit vergrößerten Kontaktflächen zwischen Fasergeflecht und dem Bauelement ergeben. Dies verleiht der formschlüssigen Verbindung einen sicheren Halt und erhöht die Haftung zwischen dem Bauelement und dem Fasergeflecht, was sich besonders vorteilhaft auf die Beanspruchbarkeit der Gesamtstruktur der Preform bzw. des fertig gestellten Bauteils auswirkt.

Für die kostengünstige industrielle Fertigung des Bauteils, insbesondere der Radfelge, ist es besonders vorteilhaft, wenn die Umflechtung mittels einer üblichen Rundflechtmaschine erfolgt. Dabei wird das Formwerkzeug für die Herstellung der Preform als Flechtkern in der Rundflechtmaschine eingesetzt.

In einer bevorzugten Ausführungsform wird das Fasergeflecht durch eine stetig wiederkehrende Änderung der Flechtrichtung gebildet, vorzugsweise durch stetig wechselnde Seitwärtsbewegungen des Flechtkernes gegenüber dem Fadenlauf der Flechtfäden. Damit können durch einfache mechanische Mittel eine oder mehrere vernetzte Lagen der Flechtfäden auf den beweglichen Flechtkern und gegebenenfalls auf den oder die mitgeführten Bauelemente aufgebracht werden.

Durch den Richtungswechsel der Flechtrichtung wird eine Wendezone des Fasergeflechtes ausgebildet, die variabel in Bezug zu einer äußeren Begrenzung der Preform bzw. des Bauteils anordenbar ist. Mit der beliebigen Anordnung der Wendezone des Fasergeflechtes kann in vorteilhafter Weise Einfluss auf die Gestaltungs- und Qualitätsmerkmale des Bauteils genommen werden.

Bevorzugter Weise ist die Flechtdichte und/ oder der Flechtwinkel der Flechtfäden lokal einstellbar, denn dadurch können örtlich unterschiedliche Strukturen des Fasergeflechts und folglich örtlich verschiedene Wandstärken des Bauteils, erzeugt werden. Die Wandstärken können somit besonders differenziert an die örtlich verschiedenen mechanischen oder thermischen Belastungen des Bauteils, wie z.B. der Radfelge, angepasst werden.

In eine weiteren bevorzugten Ausführungsform des Verfahrens wird mittels Fixierungselemente die Lage des Fasergeflechtes fixiert und zwar vorzugsweise im Bereich der Wendezone und/oder im Bereich eines Überganges des Umfangs des Flechtkerns und/oder im Bereich des/der von dem Bauelement gebildeten Überstandes oder Vertiefung. Die Fixierungselemente, die in das Fasergeflecht eingeflochten werden, bewirken neben einer bündigen Auflage des Fasergeflechts auf dem Formwerkzeug bzw. auf dem Flechtkern eine örtliche Strukturverstärkung des Fasergeflechts, die vornehmlich in den bevorzugten Bereichen für eine verbesserte Stabilität des Bauteils sorgt.

Die mechanische Beanspruchbarkeit des Bauteils wird auch dadurch erhöht, dass in das Fasergeflecht Stehfäden integriert werden, die eine axiale Faserlage erzeugen. Diese Faserlage der Stehfäden entspricht gerade bei Radfelgen der Richtung eines zu erwartenden Kraftflusses und bewirkt eine Erhöhung der Belastbarkeit der Radfelge.

Auch durch die Integration einer separaten Faserlage oder eines anderen textilen Halbzeuges in das Fasergeflecht können belastungsgerecht örtlich unterschiedliche Strukturen des Fasergeflechts und damit vorteilhaft differenzierte Wandstärken des Bauteils erzeugt werden.

Die Konsolidierung der Preform und/oder des Preformlings intensiviert zugleich den strukturellen und gegebenenfalls auch den verbindenden Stoffschluss, was folglich die Wirtschaftlichkeit und die Qualität der Bauteilfertigung, insbesondere der Fertigung der Radfelge, verbessert.

In einer besonders vorteilhafte Ausführungsform des Verfahrens ergibt sich dadurch, dass die Flechtfäden wenigstens teilweise aus Carbonfasern und/oder aus Glasfasern und/oder aus Metallfasern bestehen. Mit verschiedenen Flechtfäden aus unterschiedlichen Materialien können bedarfsgerecht angepasste Verstärkungsstrukturen erzielt werden.

Wird das Fasergeflecht durch eine uni-direktionale Ablage der Flechtfäden zueinander gebildet, entstehen besonders stabile Flechtstrukturen des Fasergeflechts.

Das erfindungsgemäße Verfahren soll nachfolgend anhand eines Ausführungsbeispieles näher erläutert werden. Die zugehörige Zeichnung zeigt dabei in
- Fig. 1: eine fragmentarische Seitenansicht einer Rundflechtmaschine mit einem geteilten Flechtkern und einem zwischenliegenden Preformling einer Radscheibe eine Radfelge,
- Fig. 2: eine Vorderansicht der Anordnung nach Fig. 1,
- Fig. 3a: Detailansicht X des Flechtkernes nach Fig. 1 in einer ersten Variante des Anschlusses des Preformlings der Radscheibe,
- Fig. 3b: eine Detailansicht des Flechtkernes nach Fig. 1 in einer zweiten Variante des Anschlusses eines Preformlings,
- Fig. 3c: eine Detailansicht des Flechtkernes nach Fig. 1 in einer dritten Variante des Anschlusses eines Preformlings,
- Fig. 4: eine Detailansicht Y des Flechtkernes nach Fig. 1,
- Fig. 5: eine stilisierte Ansicht eines zweiteiligen Flechtkerns mit einem Preformling einer Radscheibe in einer ersten Herstellungsphase der Preform der Radfelge,
- Fig. 6: Ansicht des zweiteiligen Flechtkerns mit dem Preformling nach Fig. 5 in einer zweiten Herstellungsphase der Preform der Radfelge,
- Fig. 7: Ansicht des zweiteiligen Flechtkerns mit dem Preformling nach Fig. 5 in einer dritten Herstellungsphase der Preform der Radfelge,
- Fig. 8: Ansicht des zweiteiligen Flechtkerns mit dem Preformling nach Fig. 5 in einer vierten Herstellungsphase der Preform der Radfelge,
- Fig. 9: eine stilisierte Ansicht der fertiggestellten Preform der Radfelge.

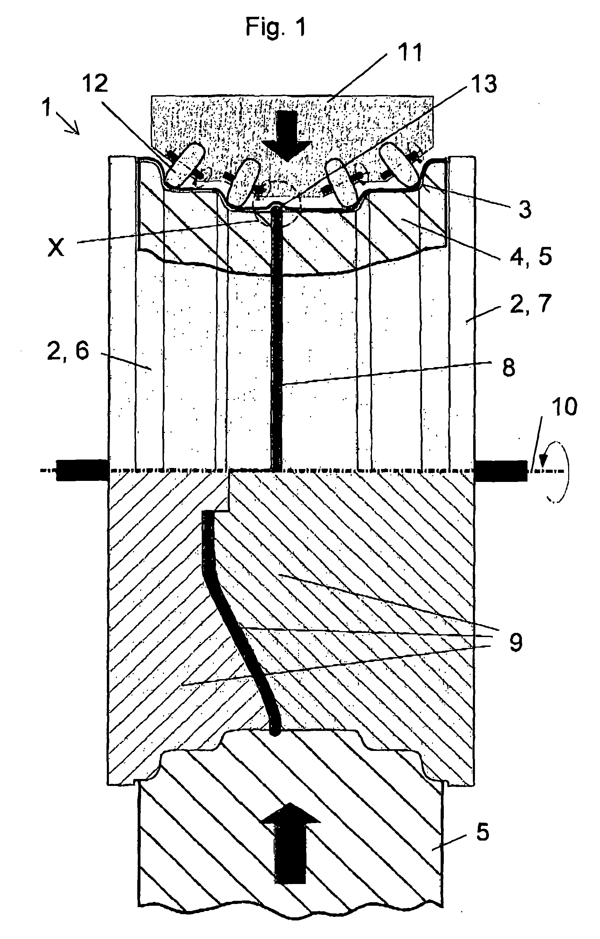

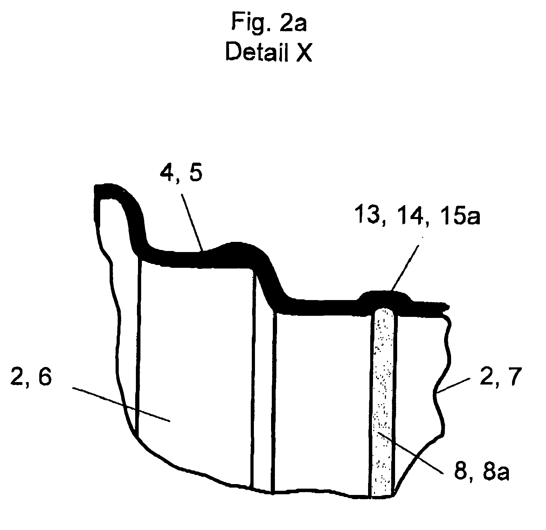

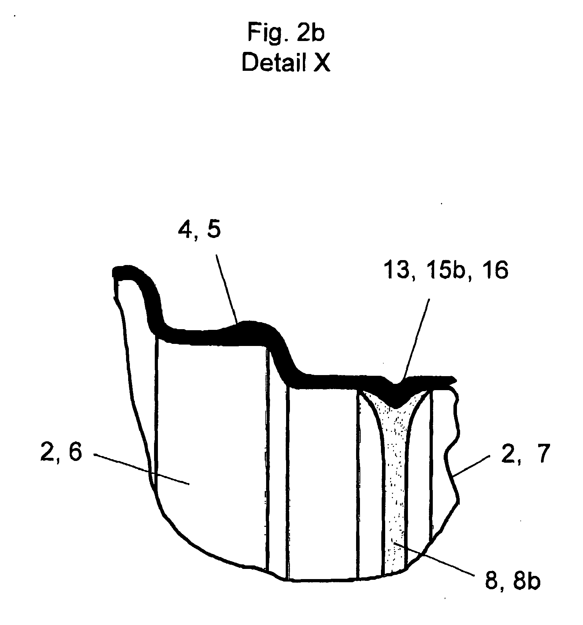

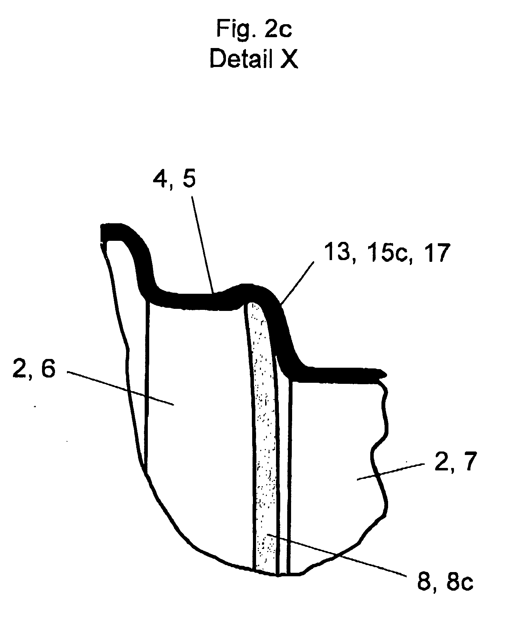

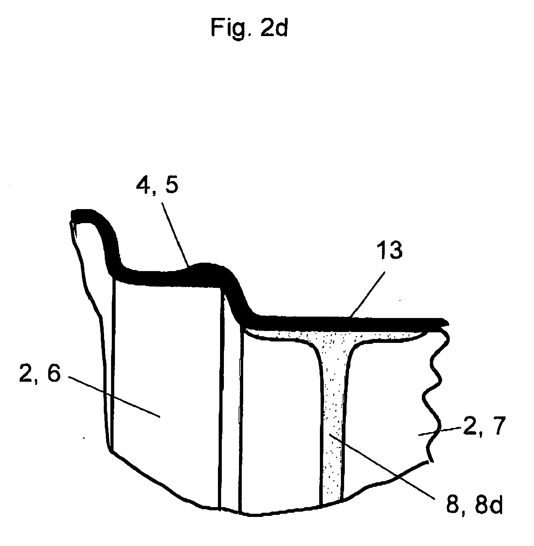

Fig. 1 und Fig. 2 zeigen jeweils einen Ausschnitt einer Rundflechtmaschine 1 mit einem Flechtkern 2. Der Flechtkern 2 wird mit Flechtfäden 3 beflochten, die über konzentrisch um den Flechtkern 3 umlaufende Flechtklöppel 4 abgespult werden. Als Flechtkern 3 dient ein Formwerkzeug 5 einer Preform 6 für die Herstellung einer Radfelge aus Faserverbundwerkstoff. Das Formwerkzeug 5 bildet an seinem Umfang die Kontur 7 eines Felgenbettes der Radfelge ab.

Der Flechtkern 2 besteht aus zwei Teilkernen 8, 9, zwischen denen ein Preformling 10 aus Fasermaterial für die Fertigung einer Radscheibe angeordnet ist. Der Preformling 10 besteht in diesem Ausführungsbeispiel aus einem strukturverstärkten TFP-Fasergelege (TFP-TAILORED FIBER PLACEMENT). Durch die Umlaufbewegung der Flechtklöppel 4 um eine Rotationssymmetrieachse 11 des Flechtkerns 2 und einer linearen, stetig wechselnden Hin- und Rückbewegungen des Flechtkernes 2 entlang der Rotationssymmetrieachse 11 wird das Formwerkzeug 5 gemeinsam mit dem Preformling 10 umwickelt und umflochten, wobei ein formschlüssig an der Umfangsfläche des Formwerkzeuges 5 und der Umfangsfläche des Preformlings 10 anliegendes Fasergeflecht 12 gebildet wird. Zusätzlich werden bei dem Umflechtvorgang nach dem Ausführungsbeispiel axial abgelegte Stehfäden 13 in das Fasergeflecht 12 eingeflochten. Entsprechend der Anforderungen an die zu fertigende Radfelge können die Flechtfäden 3 und die Stehfäden 13 teilweise aus Kohlenstofffasern, aus Glasfasern oder aus Metallfasern bestehen.

Durch die Hin- und Rückbewegung des Flechtkernes 2 wird ein entsprechender Richtungswechsel der Flechtrichtung bewirkt, wobei bei einem stetigen Richtungswechsel zumindest an den beiden umlaufenden Rändern des Fasergeflechtes 12 jeweils eine gleichmäßige, umlaufende Wendezone 14 ausgebildet wird. Diese Wendezonen 14 bilden zugleich stabile Randzonen der Preform 6, die im Ausführungsbeispiel gleichzeitig die Randzonen der fertigzustellenden Radfelge ergeben.

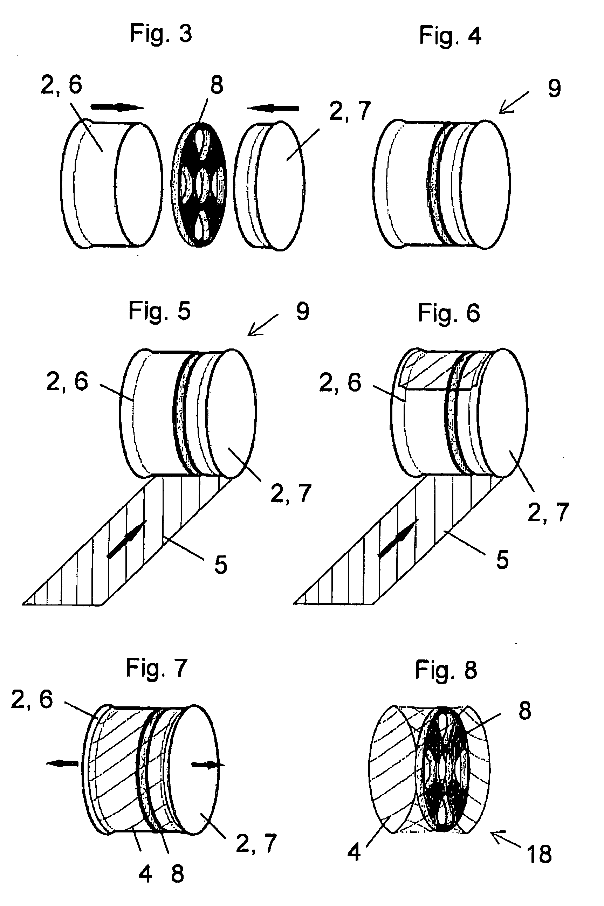

Das gestrichelt eingekreiste Detail X in Fig. 1 zeigt eine umlaufende Verbindungsstelle 15 des Fasergeflechtes 12 mit dem Preformling 10, die in Fig. 3a in einem vergrößerten Auszug des Flechtkerns 2 wiedergegeben ist. Die Fign. 3b und 3c zeigen alternative Anbindungsvarianten zur Verbindungsstelle 15 nach Fig. 3a. Die Verbindungsstelle 15 in Fig. 3a wird durch einen Preformling 10a gebildet, dessen umlaufender Rand einen radialen, umlaufenden Überstand 16 über dem Flechtkern 2, respektive über dessen beide Teilkerne 8, 9 aufweist, so dass eine Hinterschnittverbindung 17a mit einer konvexen Ausformung des aufliegenden Fasergeflechtes 12 entlang der Kontur 7 des Felgenbettes entsteht. Fig. 3b zeigt einen Preformling 10b, dessen umlaufender Rand eine radiale, umlaufende Vertiefung 18 gegenüber dem Flechtkern 2, respektive über dessen beide Teilkerne 8, 9 aufweist, so dass eine Hinterschnittverbindung 17b mit einer konkaven Ausnehmung des aufliegenden Fasergeflechtes 12 entlang der Kontur 7 des Felgenbettes entsteht. Die Vertiefung 18 kann, wie in Fig. 3b gezeigt, beispielsweise durch Drapieren des umlaufenden Randes des Preformlings 10b erzeugt werden.

Fig. 3c zeigt einen Preformling 10c in Anbindung an einen radialen Übergang 19 der Kontur 7 des Felgenbettes zwischen einem Hochbett und einem Tiefbett. Hiermit ergibt sich eine Hinterschnittverbindung 17c mit seitlicher Anlage des aufliegenden Fasergeflechtes 12 an dem Preformling 10c.

Die einzelnen Formteile (aufgetragenes Fasergeflecht 12 und der Preformling 10 in seinen alternativen Ausprägungen 10a, 10b, 10c) bilden so die Preform 6 der Radfelge. Die Formteile werden während des Konsolidierungsprozesses in ihrem Kontaktbereich miteinander verschmolzen und verharzt und ergeben die fertiggestellte Radfelge. Die Hinterschnittverbindungen 17a, 17b, 17c vergrößern nicht nur den Formschluss sondern auch die für den Stoffschluss zur Verfügung gestellten Kontaktflächen zwischen dem Fasergeflecht 12 und dem Preformling 10a, 10b oder 10c. Dies ergibt eine hohe mechanische Beanspruchbarkeit der Gesamtstruktur der Preform 6 und der fertiggestellten Radfelge.

Aus Fig. 4 ist das Details Y aus Fig. 1 in einer vergrößerten Darstellung ersichtlich und zeigt eine Wendezone 14 des Fasergeflechtes 12 mit einem eingeflochtenen Fixierungselement 20, welches als Ring oder Roving aus Kunststoff oder Metall ausgebildet ist und zur zusätzlichen Stabilisierung des umlaufenden Randes der Preform 6 dient.

In den Figuren 5 bis 9 wird der Verlauf der erfindungsgemäßen Herstellung eine Radfelge in fünf Herstellungsphasen stilisiert dargestellt.

In einer ersten Herstellungsphase nach Fig. 5 werden die beiden Teilkerne 8, 9 des Flechtkerns 2, welche jeweils einen Teil der Kontur 7 des Felgenbettes der Radfelge abbilden, unter Zwischenlage des Preformlings 10 für die Radscheibe zusammengefügt.

Gemäß Fig. 6 wird eine Werkzeugeinheit 21, bestehend aus dem mit dem Preformling 10 komplettierten Formwerkzeug 5, als Flechtkern 2 für die Umflechtung in der Rundflechtmaschine 1 bereitgestellt.

In einer dritten Herstellungsphase nach Fig. 7 wird die Werkzeugeinheit 21 mehrfach mit Flechtfäden 3 umflochten und das Fasergeflecht 12 gebildet, welches gleichzeitig mit dem Preformling formschlüssig verbunden wird.

Fig. 8 zeigt die Herstellungsphase der Entformung der zusammengesetzten Preform 6 der Radfelge, bei der die beiden Teilkerne 8, 9 des Flechtkernes 2 seitwärts in der jeweils gezeigten Pfeilrichtung entfernt werden.

In Fig. 9 ist die entformte Preform 6 der Radfelge dargestellt, welche das geflochtene, entsprechend der Kontur 7 des Felgenbettes der Radfelge geformte Fasergeflecht 12 in Verbindung mit dem Preformling 10 der Radscheibe umfasst. Dieser Preform 6 bildet das Zwischenprodukt vor deren Konsolidierung auf dem Weg zur Fertigstellung der Radfelge. Dieser Vorgang der Konsolidierung kann alternativ auch vor der Entformung der Preform 6, also vor dem Entfernen der Teilkerne 8, 9 des Flechtkerns 2 in der Herstellungsphase nach Fig. 8 erfolgen.

Mit dem vorbeschriebenen erfindungsgemäßen Verfahren kann die Herstellung der Radfelge durchgängig maschinell erfolgen kann - insbesondere entfällt eine manuelle Anformung des Fasergeflechtes 12 an das Formwerkzeug 5 und ein manuelles Verbinden mit Bauelementen, wie der Radscheibe 10. Damit eignet es sich für eine industrielle Großserienfertigung von Radfelgen aus Faserverbundwerkatoff.

### Bezugszeichenliste

- 1: Rundflechtmaschine
- 2: Flechtkern
- 3: Flechtfäden
- 4: Flechtklöppel
- 5: Formwerkzeug
- 6: Preform, Preform der Radfelge
- 7: Kontur des Felgenbettes
- 8: Teilkern des Flechtkern
- 9: Teilkern des Flechtkern
- 10: Bauelement, Preformling der Radscheibe a, b, c
- 11: Rotationssymmetrieachse des Flechtkernes
- 12: Fasergeflecht
- 13: Stehfäden
- 14: Wendezone
- 15: Verbindungsstelle
- 16: umlaufender Überstand
- 17: Hinterschnittverbindung a, b, c
- 18: umlaufende Vertiefung
- 19: radialer Übergang der Kontur des Felgenbettes
- 20: Fixierungselement, Ring, Roving
- 21: Werkzeugeinheit

## Patentansprüche

1. Verfahren zur Herstellung von Radfelgen aus Faserverbundwerkstoffen, insbesondere zum Einsatz in der Kraftfahrzeugtechnik, bei dem eine Preform (6) der Radfelge durch Ablage eines Fasermaterials (12) auf einem die Kontur des Felgenbettes abbildenden Formwerkzeug (5) gebildet wird und die Preform (6) anschließend konsolidiert wird, **dadurch gekennzeichnet, dass** die Preform (6) der Radfelge durch maschinelle Umflechtung gebildet wird, bei der das Formwerkzeug (5) als Flechtkern (2) dient und derart mit Flechtfäden (3) umflochten wird, dass ein Fasergeflecht (12) entsteht, welches formschlüssig am Formwerkzeug (5) anliegt.

2. Verfahren nach Anspruch 1, **dadurch gekennzeichnet, dass** gemeinsam mit dem Formwerkzeug (5) wenigstens ein Bauelement (10) der Radfelge umflochten wird, wobei das Fasergeflecht (12) formschlüssig am Formwerkzeug (5)und an einer umlaufenden Kontur des Bauelementes (10) anliegt.

3. Verfahren nach Anspruch 2, **dadurch gekennzeichnet, dass** während der Konsolidierung der Preform (6) ein am Bauelement (10) anliegender Abschnitt des Fasergeflechtes (12) mit dem Bauelement(10) stoffschlüssig verbunden wird.

4. Verfahren nach einem der Ansprüche 2 oder 3, **dadurch gekennzeichnet, dass** das Bauelement (10) aus Faserverbundwerkstoff oder aus Metall besteht.

5. Verfahren nach Anspruch4, **dadurch gekennzeichnet, dass** das Bauelement (10) aus einem Preformling aus Fasermaterial gebildet ist.

6. Verfahren nach einem der Ansprüche 1 bis 5, **dadurch gekennzeichnet, dass** der Flechtkern (2) mehrteilig ausgebildet ist.

7. Verfahren nach einem der Ansprüche 2 bis 6, **dadurch gekennzeichnet, dass** das Bauelement (10) zwischen zwei die Kontur (7) des Felgenbettes der Radfelge abbildenden Teilkernen (8, 9) des Flechtkernes (2) angeordnet ist.

8. Verfahren nach einem der Ansprüche 2 bis 7, **dadurch gekennzeichnet, dass** das Bauelement (10) derart dimensioniert und dem Flechtkern beigeordnet ist, dass es im Verhältnis zum Umfang des Flechtkernes (2) einen radialen, vorzugsweise umlaufenden Überstand (16) gegenüber dem Flechtkern (2) und/oder eine radiale, vorzugsweise umlaufende Vertiefung (18) gegenüber dem Flechtkern (2) bildet.

9. Verfahren nach einem der Ansprüche 1 bis 8, **dadurch gekennzeichnet, dass** die Umflechtung mittels einer Rundflechtmaschine (1) erfolgt.

10. Verfahren nach einem der Ansprüche 1 bis 9, **dadurch gekennzeichnet, dass** das Fasergeflecht (12) durch eine stetig wiederkehrende Änderung der Flechtrichtung gebildet wird, vorzugsweise durch stetig wechselnde Seitwärtsbewegungen des Flechtkernes (2) gegenüber dem Fadenlauf der Flechtfäden (3).

11. Verfahren nach einem der Ansprüche 1 bis 10, **dadurch gekennzeichnet, dass** durch den Richtungswechsel der Flechtrichtung eine Wendezone (14) des Fasergeflechtes (12) ausgebildet wird, die variabel in Bezug zu einer äußeren Begrenzung der Preform (6)/der Radfelge anordenbar ist.

12. Verfahren nach einem der Ansprüche 1 bis 11, **dadurch gekennzeichnet, dass** die Flechtdichte und / oder der Flechtwinkel der Flechtfäden (3) lokal einstellbar ist.

13. Verfahren nach einem der Ansprüche 1 bis 12, **dadurch gekennzeichnet, dass** mittels Fixierungselemente (20) die Lage des Fasergeflechtes (12) fixiert wird, vorzugsweise im Bereich einer Wendezone (14) des Fasergeflechts und/oder im Bereich eines Überganges (19) des Umfangs des Flechtkerns (2) und/oder im Bereich des/der vom Bauelement (10) gebildeten Überstandes (16) bzw. Vertiefung (18).

14. Verfahren nach einem der Ansprüche 1 bis 13, **dadurch gekennzeichnet, dass** in das Fasergeflecht (12) Stehfäden integriert werden, die eine axiale Faserlage erzeugen.

15. Verfahren nach einem der Ansprüche 1 bis 14, **dadurch gekennzeichnet, dass** eine separate Faserlage oder ein textiles Halbzeug in das Fasergeflecht (12) integriert wird.

16. Verfahren nach einem der Ansprüche 1 bis 15, **dadurch gekennzeichnet, dass** die Konsolidierung der Preform (6) und/oder des Preformlings (10) mittels einer Injektion, vorzugsweise mittels Harzinjektion, erfolgt.
